# EUROPEAN PATENT SPECIFICATION

(11) **EP 0 628 957 B1**
(45) Date of publication and mention of the grant of the patent: **16.04.1997**
(21) Application number: 94113081.7
(22) Date of filing: 28.09.1990
(51) Int. Cl.: G11B 7/24

(54) **Optical information recording medium**
Optisches Informationsaufzeichnungsmedium
Milieu d'enregistrement optique d'informations

(30) Priority: 29.09.1989 JP 252362/89; 29.09.1989 JP 252361/89
(43) Date of publication of application: 14.12.1994
(62) Divisional of application: 90118709.6
(73) Proprietor: SONY CORPORATION, Tokyo (JP); MITSUBISHI GAS CHEMICAL COMPANY, INC., Tokyo, 100 (JP)
(72) Inventor: Kudo, Junichiro, c/o Sony Magnetic Products, Inc., Shinagawa-ku, Tokyo (JP); Kohno, Katsumi, c/o Sony Magnetic Products, Inc., Shinagawa-ku, Tokyo (JP); Umemura, Toshikazu, Mitsubishi Gas Chemical Co Inc, Chiyoda-ku, Tokyo (JP); Matsumura, Makoto, c/o Mitsubishi Gas Chemical Co., Tokyo (JP)
(74) Representative: TER MEER - MÜLLER - STEINMEISTER & PARTNER

(56) References cited:
- EP-A- 0 175 905
- EP-A- 0 327 951

## Description

### BACKGROUND OF THE INVENTION

### Field of The Invention

This invention relates to optical information recording mediums such as magneto-optic disks, various write-once optical disks, and digital audio disks or so-called compact disks. More particularly, the invention relates to an improved optical information recording medium wherein an injection molded piece of a polycarbonate resin is used as a substrate for the medium.

### Description of The Prior Art

In optical information recording mediums wherein information is recorded and reproduced by irradiation of a laser beam, such as magneto-optic disks, various write-once optical disks, erasable optical disks and digital audio disks, typically a polycarbonate resin injection molded article or piece is used as the substrate. Injection molded pieces of polycarbonate resins provide a number of advantages. They have a good heat resistance, are easily subsequently molded, suffer less deformation and undergo little change in quality after the molding process, and have good mechanical characteristics such as impact resistance. Further, compared to glass substrates, the polycarbonate resin pieces are more conducive to mass-production and are thus less expensive.

Frequently metal-based recording materials are used as the information recording layer of the optical information recording mediums; typical the recording layer is a rare earth element-transition metal amorphous alloy film as used in magneto-optic disks. Accordingly, a major problem that is encountered in practical applications is how to increase the resistance of the metal layer to corrosion.

In view of the above, optical information recording mediums based on substrates of injection molded polycarbonate resin have not always performed satisfactory with respect to the long-term reliability of the information recording medium. For instance, when stored at high temperatures and high humidity, the recording film or reflection film often corrodes. Corrosion brings about a failure in reproduction due to the increase in error rate, presenting a great obstacle in guaranteeing reliability.

Where polycarbonate resins are injection molded and used as a substrate, the usual practice is to add releasing agents. Releasing agents are necessary to ensure that the product's resistance to being released from the mold is not great or the resultant pieces will suffer warpage or optical strain.

Known releasing agents used for polycarbonate resins include paraffin, silicone oils, fatty acid esters, partial esters of fatty acids (especially, fatty acid monoglycerides) and the like. Some release agents exhibit a good releasing effect when added in small amounts, on the other hand, some do not provide a satisfactory effect unless added in large quantities. Silicone oils which must be used in large amounts will impede the adhesion of the film and some may cause the film to be corroded.

Typical agents which exhibit a good releasing effect only in small amounts include fatty acid monoglycerides. However, preservation tests conducted at high temperatures and humidity demonstrate that fatty acid monoglycerides cause a hydrolysis of the polycarbonate resins. When polycarbonate resins are hydrolyzed, the hydrolyzates are deposited as fine white spots in the final moldings, thereby causing the dispersion of a laser beam (local anomaly of birefrigence), the lowering in adhesion of films, and the deterioration in strength of the substrate.

EP-A-0 327 951 discloses an optical information recording medium with a polycarbonate substrate containing a fatty acid ester, e.g. glycerine triacetate, as mold releasing agent without, however, specifying its concentration or hydroxyl value.

### SUMMARY OF THE INVENTION

It is an object of the invention to provide an optical information recording medium that utilizes an improved substrate ensuring long-term reliability.

It is a further object of the invention to provide an optical information recording medium using a polycarbonate resin as a substrate and providing good releasing properties to the molded pieces used as the substrate while suppressing hydrolysis of the polycarbonate resins and providing a medium having a reduced number of defects and highly reliability.

In accordance with the present invention, the above objects are achieved by an optical information recording medium according to claim 1.

The inventors have found that when a fatty acid monoglyceride was used as a releasing agent, the hydroxyl group at the terminal ends of the molecule of the monoglyceride facilitated the hydrolysis of the polycarbonate resin. Accordingly, the optical information recording medium of the invention, in an embodiment, utilizes as a releasing agent a fatty acid ester that is free of any terminal end hydroxyl groups. At the same time, a relatively low molding temperature is used so that the formation of hydroxyl groups due to the decomposition of the fatty acid esters is suppressed.

More particularly, according to the invention, there is provided an optical information recording medium that comprises a substrate and an information recording layer formed on the substrate that is capable of recording or reproducing information by optical irradiation. The substrate is made of a molded piece obtained by subjecting a polycarbonate resin composition, which comprises a polycarbonate resin and 0.005 to 0.5 parts by weight of a fatty acid ester releasing agent having a hydroxyl value of not greater than 5 mg of KOH/g based on 100 parts by weight of the resin and which has a thermal stabilizer content of not greater than 5 ppm, to injection molding at a temperature of from approximately 280°C to about 326°C.

### BRIEF DESCRIPTION OF THE DRAWINGS

Fig. 1 schematically illustrates an example of an injection molding machine;
Figs. 2 to 4 are, respectively, schematic sectional views illustrating the injection molding steps in the successive order wherein Fig. 2 illustrates a step of closing the mold, Fig. 3 illustrates the step of filling the mold with a resin melt, and Fig. 4 illustrates a step of clamping the mold;
Fig. 5 graphically represents the number of white spots in the substrate versus preservation time for releasing agents having different hydroxyl values;
Fig. 6 graphically represents the number of defects in the recording layer versus preservation time for comparison of layers with and without a thermal stabilizer contained therein;
Fig. 7 graphically represents the number of contaminations versus resin temperature for the case where a polycarbonate resin not containing any thermal stability is injection molded and for a case where a polycarbonate containing a thermal stabilizer is injection molded; and
Fig. 8 graphically represents the number of defects in the substrate versus preservation time for the case where behenyl behenate is used as a releasing agent and for a case where stearic acid monoglyceride is used as the agent.

### DETAILED DESCRIPTION AND PREFERRED EMBODIMENTS OF THE INVENTION

The polycarbonate resins used as a substrate material in the optical information recording medium of the invention are those that are prepared by an interfacial polymerization process wherein aromatic bisphenols such as, for example, bisphenol A and phosgene, are reacted in the presence of an acid binding agent such as, for example, an alkali, e.g. sodium hydroxide, in a solvent including a halogenated hydrocarbon such as methylene chloride, chloroform, carbon tetrachloride, dichloroethane, trichloromethane, or the like.

Examples of the polycarbonate resins include, aside from ordinary polycarbonate resins, branched polycarbonate resins using trifunctional or polyfunctional organic compounds having a phenolic hydroxyl group as a branching agent, long chain alkyl-terminated polycarbonate resins using as an end terminating agent a monofunctional organic compound such as a long chain alkyl chloride or long chain alkyl-substituted phenol, long chain terminated, alkyl-branched polycarbonate resins using the above-mentioned branching agents and end terminators, graft polymers obtained by graft-polymerizing styrene to modified polycarbonate resins obtained by using bisphenols having an unsaturated double bond and vinyl phenol, graft polymers of polycarbonate resins with modified styrene having a phenolic hydroxyl group, and mixtures thereof. The polycarbonate resins used have a viscosity-average molecular weight of 13,000 to 30,000.

These polycarbonate resins are charged into an injection molding machine in the form of pellets and melted by means of a heater. This is followed by extrusion into a mold to form a substrate piece.

Releasing agents are added to the polycarbonate resins to increase their releasibility from the mold. The releasing agents used in the present invention preferably consist of primarily fatty acid esters having no alcoholic hydroxyl group. By fatty acid esters having no alcoholic hydroxyl group what is meant are the esters obtained by reaction between alcoholic hydroxyl groups and fatty acids in equimolar amounts (nominal amounts) or a reaction wherein an excess amount of fatty acids are used, i.e., esters having only a very small amount of unreacted or remaining alcohol. Alternatively, naturally occurring ester waxes such as plants, animals, insects, and minerals can be used. Pursuant to the present invention, the releasing agent has a hydroxyl value of not greater than 5 mg of KOH/g. When the hydroxyl value exceeds 5 mg of KOH/g, the hydrolysis of the polycarbonate is facilitated, increasing defects in the substrate.

Specific examples of the esters that can be used as releasing agents include synthetic esters such as butyl stearate, stearyl stearate, behenyl behenate, methyl laureate, isopropyl palmitate, 2-ethylhexyl stearate or pentaerythritol tetrabehenate, and beeswax mainly composed of long chain fatty acid esters having a high purity of the esters.

The content of releasing agent used is in the range of from 0.005 to 0.5 parts by weight per 100 parts by weight of the polycarbonate resin. If the amount is less than the above range, it is difficult to maintain good releasing characteristics, resulting in the possibility that the resultant substrate will warp or suffer optical strain. On the other hand, if the releasing agent is used in greater amounts, this can result in disadvantages such as poor adhesion to the information recording layer.

Preferably, the polycarbonate resin used for the injection molding should not contain phosphorus compound such as a phosphite as a thermal stabilizer. In this regard, it should be noted that the term "polycarbonate not containing a thermal stabilizer" means that such a thermal stabilizer is not intentionally incorporated in the compound for the purpose of preventing thermal decomposition of the polycarbonate resin. Accordingly, for example, a trace amount of phosphorus compound can be contained, or small amounts (e.g. 5 ppm) of thermal stabilizers can be contained for some other reasons within the polycarbonate resin not containing a thermal stabilizer of the present invention, and therefore such compounds should fall within the scope of that term.

The polycarbonate resin is charged into an injection molding machine in the form of pellets. The pellets are melted by means of a heater and extruded into a mold to form a substrate piece. The resin temperature should preferably be kept as low as possible, provided that uniform kneading is possible, and should preferably be not greater than 326°C. In addition, at higher temperatures the fatty acid ester contained as the releasing agent decomposes not only facilitating hydrolysis of the polycarbonate resin, but also thermally decomposing the resin thereby increasing contaminations therein. If, however, the resin temperature is too low, there is the possibility that optical characteristics such as birefrigence of the substrate will suffer. Accordingly, the lower limit is generally set at approximately 280°C.

When the releasing agent consists primarily of fatty acid esters (full esters) free of any alcoholic hydroxyl group and having a hydroxyl value of not greater than 5 mg of KOH/g and the resin temperature during the injection molding is not greater than 326°C, the hydrolysis of the polycarbonate resin can be limited.

A resin temperature of not greater than 326°C during the injection molding prevents contamination due to the thermal decomposition of the resin and the need for thermal stabilizers, with an attendant advantage from the standpoint of reduced corrosion of the recording layer.

By way of example and not limitation, examples of the present invention will now be given.

### Example 1

### Injection Molding

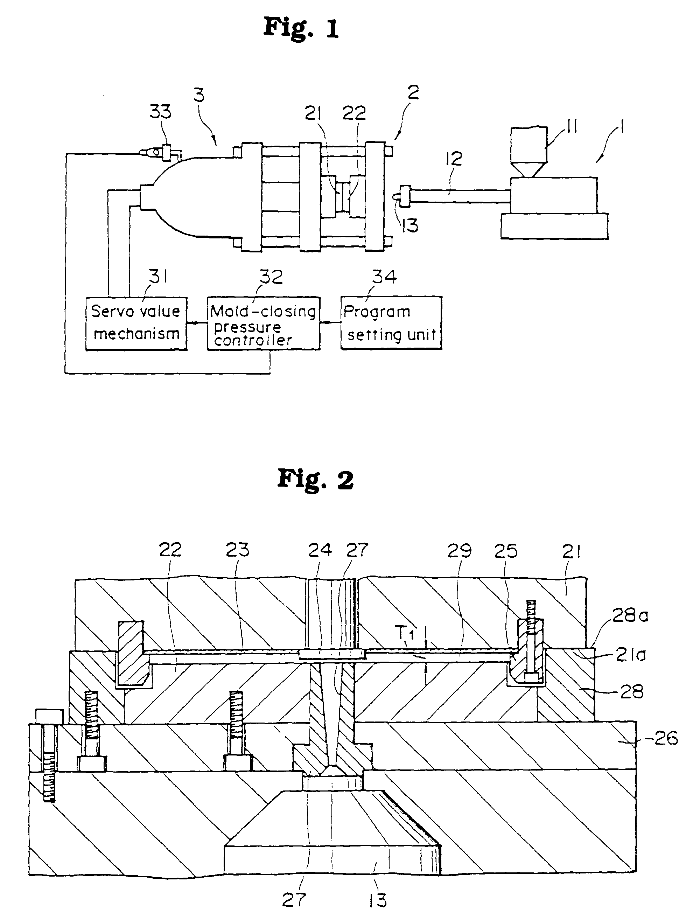

The injection molding machine used in this example will be initially described. The injection molding machine is comprised, as illustrated in Fig. 1, of a resin injection unit 1 for supplying a polycarbonate resin melt into a mold, a mold unit 2 having a cavity corresponding to the shape of an optical disk substrate, and a mechanism 3 for closing the mold that applies a pressure to the mold unit 2.

The resin injection unit 1 includes a hopper 11 into which resin pellets are charged, a heating cylinder 12 having a heater therearound and a screw in the inside thereof, and a nozzle 13. The resin pellets are fed from the hopper 11 and successively melted. The resin melt is extended from the tip of the nozzle 13.

The mold unit 2 includes as illustrated in Fig. 2, a movable portion 21 and a side cavity portion 22. The movable portion 21 includes a stamper 23 which is fixed with an inner margin holder 24 for the stamper and an outer margin holder 35 for the stamper. The side cavity portion 22 is fixed by a fixing plate 26 and is provided at the center thereof with a resin injection port 27. The resin injection port 27 is connected to the nozzle 13 of the resin injection unit 1 and includes an opening 27a at the tip thereof.

At the periphery of the side cavity portion 22 is provided a mold holder 28 that is fixed to a fixing plate 26. The movable portion 21 contacts at an outer margin thereof a top face 28a of the mold holder 28 to close the mold wherein a cavity 29 having a desired shape is created between the mold parts 21 and 22.

The mold unit 2 is provided with a mechanism for closing the mold 3 that is capable of moving the movable part 21 in longitudinal directions. The mechanism 3 for closing the mold used in this example is a so-called booster ram-type closing mechanism. The booster ram-type closing mechanism is one wherein a booster ram having a smaller diameter than a main ram is inserted coaxially with the central axis of the main ram so that the main ram can be moved at a high speed. The booster ram-type mechanism has been widely used in mid-sized injection molding machines.

The mechanism 3 for closing the mold is coupled to a servo valve mechanism 31 and is controlled using a controller 32 that controls the closing pressure. The pressure controller 32 is connected to the mechanism 3 through a pressure sensor 33. By operating the mechanism 3 for closing the mold, the pressure applied to the movable portion 21 is detected using a pressure sensor 33 and the closing pressure controller 32 is controlled by the detected signal thereby controlling the servo valve mechanism 31.

The mold-closing pressure controller 32 is also coupled to a programmable unit 34 in which the application of pressure and timing for the movable portion 21 can be programmed. An output signal from the programmable unit 34 is applied to the mold-closing controller 32 to operate the servo valve mechanism 31 thereby controlling the oil pressure and operation time of the mechanism 3 for closing the mold. By this control, the closing pressure of the movable part 21 is controlled during the course of the injection of the resin melt into the cavity 29 between the movable part 21 and the cavity side part 22 or after completion of the injection step. Variations of the mold-closing pressure should preferably be controlled digitally and the response speed should preferably be high (e.g. the de-compression of from 140 kg/cm² to 0 kg/cm² should preferably be completed within 0.5 seconds).

The mechanism 3 for closing the mold is not limited to the afore-stated booster ram-type closing mechanism, but, a toggle-type mechanism can also, if desired, be utilized. With a toggle-type mold-closing mechanism, a mold-closing cylinder force is enlarged by a link mechanism called a toggle, a great mold-closing force can be obtained with the mechanism. This type of mechanism ensures a great mold-closing pressure, utilizing a small-size cylinder and a high speed mold-closing operation. The molding procedure for molding an optical disk substrate from polycarbonate resins by the use of the injection molding machine of the type stated above is described.

In this example, for the fabrication of an optical disk substrate, the outer margin 21a of the movable part 21 is contacted with the top face 28a of the mold holder 28, that is provided at an outer periphery of the cavity side part 22, to close the mold as illustrated in Fig. 2. In this position, the polycarbonate resin melted in the resin injection unit 1 is injected into the cavity 29 from the resin injection port 27 through the nozzle 13.

The mold temperature is not critical and should preferably not be greater than the thermal deformation temperature of an optical disk substrate in view of skew characteristics. Preferably, the mold temperature is generally in the range of from 50 to 120°C,

As the injection procedure continues, the resin melt fills the cavity 29. In this example, the filling pressure is set so that it is slightly greater than the mold-closing pressure which is applied to the movable part 21.

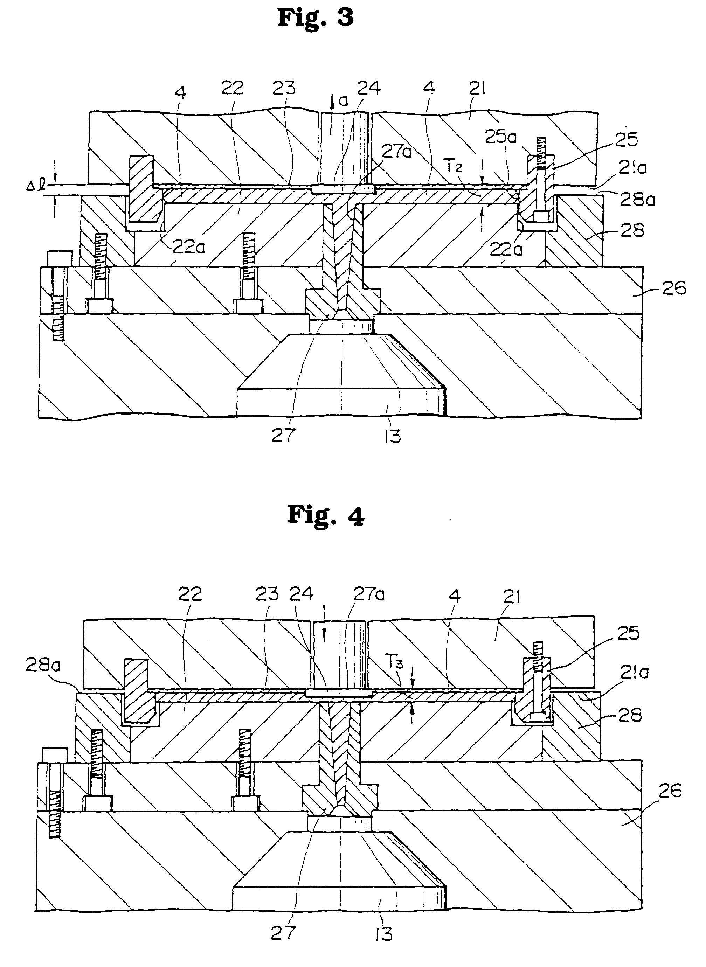

Accordingly, when the resin melt 4 is injected into the cavity 29 of the mold unit 2 in the closed position, the movable part 21 is retracted toward the arrow a, as illustrated in Fig. 3, by Δ ℓ by the action of the filling pressure, so that the distance between the parts 21 and 22 is forced to increase from T₁ of Fig. 2 to T₂ of Fig. 3.

In this manner, when the filling pressure is set slightly greater than the mold-closing pressure applied to the movable part 21 and the distance or gap between both parts 21 and 22 can be varied, the pressure within the cavity 29 is made uniform by variation of the gap. This ensures that the resin melt 4 is fully packed throughout the cavity 29, thus leading to the creation of an optical disk substrate that has a high dimensional accuracy.

Because the movable part and the side cavity portion are opened by the filling pressure, the pressure within the cavity 29 cannot be extremely high, with advantages that an unnecessary strain is exerted on the resin melt 4, which is favorable in improving the birefrigence. In this regard, however, if the pressure for closing the mold, applied to the movable part, is too small, transferability may be insufficient. Taking the above into consideration, the mold-closing pressure should preferably be set appropriately.

When the mold parts 21 and 22 are caused to open by the application of the filling pressure, the resin melt 4 enters into the small gap between the parts 21 and 22. This creates the possibility of causing a so-called burr to occur. In the illustrated apparatus, the inner peripheral face 25a of a ring-shaped outer peripheral stamper holder 25, provided at the movable part 21, corresponding to the outer margin of the disk substrate and an outer peripheral face 22a of a stepped portion, corresponding to the diameter of the disk substrate of the cavity side part 22, are provided so that they cross in the direction substantially intersecting with the substrate surface. Utilizing this construction the likelihood of the occurrence of a burr is reduced.

When the filling of the cavity with the resin melt 4 is completed, a uniform pressure is applied to over the entire surface of the resin 4. This pressure is due to the mold-closing pressure of the movable part that is maintained. When cooled, the parts 21 and 22 are closed by shrinkage of the resin as illustrated in Fig. 4.

As a result, the resin melt 4 within the cavity 29 is formed into a disk substrate having a given thickness T₃ and pits or pre-grooves preliminarily formed in the stamper 23 are transferred. At this stage, the resin 4 is not fully solidified wherein the outer peripheral portion becomes solidified as a skin layer but the inside remains fluidized as a core layer.

At this time, or before the resin is not completely solidified, the mold-closing pressure applied to the movable part 21 is abruptly released, or decompressed to zero or a very low pressure. To achieve the abrupt release of the mold-closing pressure, when, for example, the booster ram-type closing mechanism is utilized, the servo valve mechanism 31 is operated through the mold-closing controller 32 so that the oil in the cylinder chambers of the main ram and the booster ram is abruptly discharged. Similarly, utilizing the toggle-type mold-closing mechanism, the pressure within mold-closing cylinder is released, thereby releasing the mold-closing pressure in the link mechanism. Alternatives utilizing a general-purpose injection molding machine, a pressure valve can be released to abruptly release the applied pressure. The abrupt release of the mold-closing pressure is very effective in controlling the birefrigence.

In this manner, the closing pressure of the movable part 21 is released at a given time to control an initial value of birefrigence, after which the resin is completely solidified while maintaining its state. At this stage, the mold parts 21 and 22 are maintained in a state so that they contact the resin 4 and the closing pressure alone is released.

Finally, the mold parts 21 and 22 are opened allowing the removal of the molded optical disk substrate.

The resultant optical disk substrate cannot be used as is. As time passes, the birefrigence gradually approaches zero, whereupon when the substrate is annealed and the birefrigence is stabilized near zero. The annealing temperature is in the range of approximately 70 to 120°C.

The above procedure is performed while separating a transfer zone and it birefrigence control zone during the molding process. Accordingly, these operations can be independently controlled, making it possible to form an optical disk substrate which satisfies the requirements including the birefrigence and the transfer characteristics, which are contrary to each other.

Utilizing the injection molding procedure set forth previously, polycarbonate resins to which 0.04 wt% of releasing agents (behenyl behenate) having different hydroxyl values of 4.8 mg of KOH/g, 12.3 mg of KOH/g and 25.2 mg/KOH/g were each injection molded to obtain substrate E (hydroxyl value of 4.8 mg of KOH/g), substrate F (12.3 mg of KOH/g) and substrate G (2.5 mg of KOH/g). Each of the substrates had a diameter of 120 mm.

The hydroxyl value of the releasing agent was determined according to the pyridine-acetic anhydride method.

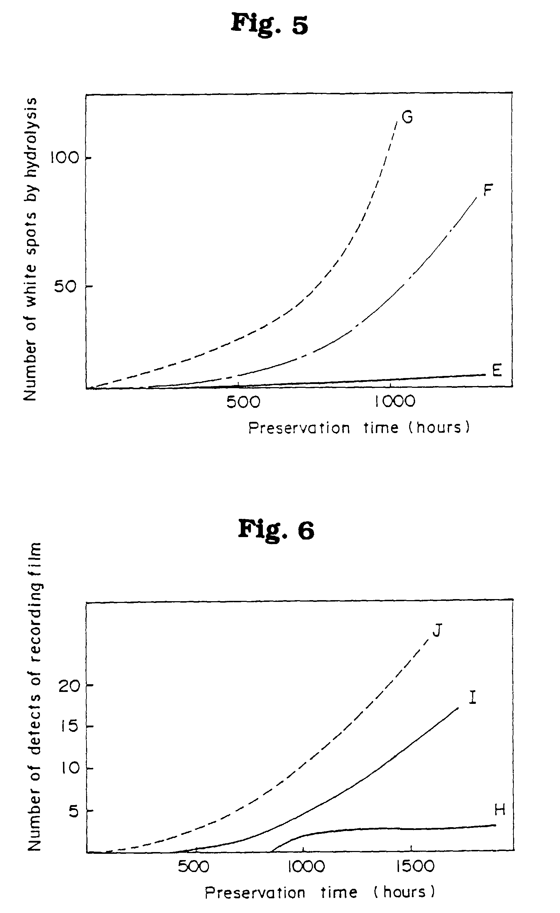

These substrates were placed in an environment having a temperature of 85°C and a relative humidity of 90% to determine the number of white spots caused by hydrolysis of the polycarbonate with respect to the time. The results are illustrated in Fig. 5. In the figure, curve E represents substrate E, curve F represents substrate F, and curve G represents substrate G.

From Figure 5, it can be seen that the hydroxyl value of the releasing agent greatly influences the number of white spots. With a substrate E having a low hydroxyl value, little increase in the number of white spots are observed versus time. A higher hydroxyl value results in a significant increase in the number of white spots as time passes.

### Example 2

In this example, the influences of a thermal stabilizer and the resin temperature at the time of the injection molding were determined.

A polycarbonate resin free of thermal stabilizers and polycarbonate resins containing 15 ppm and 55 ppm of a thermal stabilizer (trisnonylphenyl phosphite) were each injection molded into a substrate. On the substrate were successively formed: a 50nm (500 angstrom) thick transparent dielectric layer (Si₃N₄ film); a 60nm (600 angstrom) thick recording layer (TbFeCo layer); and a 5 µm thick UV-cured resin layer to obtain a magneto-optic disk.

These magneto-optic disks were preserved at a temperature of 80°C and a relative humidity of 85% to determine defects produced in the recording layer. As illustrated in Fig. 6, when the thermal stabilizer is present, defects considerably increase.

In Fig. 6, curve H represents the situation where no thermal stabilizer is present, curve I represents the situation wherein 15 ppm of thermal stabilizer is present, and curve J represents the situation wherein 55 ppm of the thermal stabilizer is present.

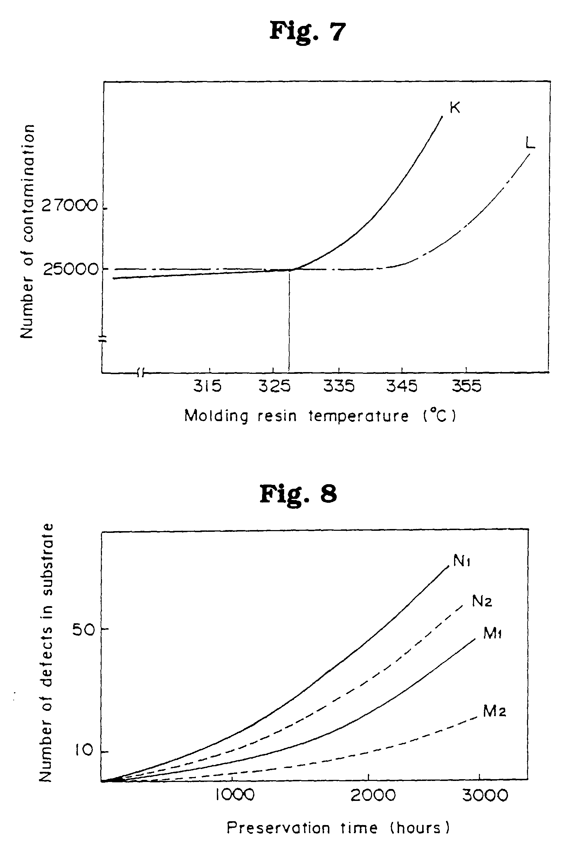

The contamination depending on the resin temperature was then determined. The results are illustrated in Fig. 7. In Figure 7, curve K represents the situation wherein no thermal stabilizer is present and curve L represents the situation wherein 15 ppm of the thermal stabilizer is present. The number of contaminations were determined by counting foreign matters or denatured matters that hold a diameter of from 0.5 to 1 µm. The number of contaminations per g of the substrate is illustrated.

When a thermal stabilizer is present, only a slight increase of contaminations is found at temperatures of not greater than 345°C. However, when the thermal stabilizer is not present, the number of contaminations increases when the temperature exceeds 326°C. Accordingly, when polycarbonate resins free of any stabilizer are molded, it is necessary to limit the resin temperature to 326°C or below.

### Example 3

Substrate M which was molded using a releasing agent mainly consisting of behenyl behenate (hydroxyl value 4.0 mg of KOH/g) and substrate N which was molded using a releasing agent mainly consisting of stearic acid monoglyceride (hydroxyl value 310 mg of KOH/g) were preserved at a temperature of 85°C and a relative humidity of 85% to determine defects produced in the respective substrates. At the same time, the resin temperature was varied during the molding step to determine the influence of the temperature on defects. All of the substrates used had no thermal stabilizer.

The results are illustrated in Fig. 8. In Figure 8, curve M₁ represents substrate M (resin temperature 338°C), curve M₂ represents substrate M (resin temperature 325°C), curve N₁ represents substrate N (resin temperature 338°C), and curve N₂ represents substrate N (resin temperature 325°C).

At both temperatures, the substrates using behenyl behenate as the releasing agent proved to be more advantageous. Especially, when behenyl behenate was used as the releasing agent and the resin temperature was 325°C, the increase in the number of defects in the substrate was very slight.

Although the present invention is described based on the experimental results, the invention is applicable of all the types of optical information recording mediums including magnet-optic disks, various write-once optical disks and the like. The structure of the medium is not critical.

## Claims

1. An optical information recording medium of the type which comprises a substrate and a recording layer formed on the substrate, the substrate comprising an injection molded piece of a polycarbonate resin composition containing a fatty acid ester as mold releasing agent **characterized in that** said fatty acid ester has a hydroxyl value of not greater than 5 mg KOH/g and is contained in an amount of 0.005 to 0.5 % by weight of the polycarbonate resin, and that said polycarbonate resin composition has a thermal stabilizer content of not greater than 5 ppm.

2. The optical information recording medium of claim 1 wherein the thermal stabilizer is a phosphorous compound.

3. A process for preparing an optical information recording medium according to claim 1 comprising the step of injection molding said polycarbonate resin composition at a temperature of from 280°C to 326°C to form said substrate as a molded piece.

## Patentansprüche

1. Optisches Informationsaufzeichnungsmedium des Typs, umfassend ein Substrat und eine auf dem Substrat gebildete Aufzeichnungsschicht, wobei das Substrat ein spritzgegossenes Teil aus einer Polycarbonatharzzusammensetzung umfaßt, die einen Fettsäureester als Formtrennmittel enthält, **dadurch gekennzeichnet,** daß der Fettsäureester eine Hydroxylzahl von nicht mehr als 5 mg KOH/g aufweist und in einer Menge von 0,005 bis 0,5 Gew.-% des Polycarbonatharzes enthalten ist, und daß die Polycarbonatharzzusammensetzung einen Wärmestabilisatorgehalt von nicht mehr als 5 ppm aufweist.

2. Optisches Informationsaufzeichnungsmedium nach Anspruch 1, wobei der Wärmestabilisator eine Phosphorverbindung ist.

3. Verfahren zum Herstellen eines optischen Informationsaufzeichnungsmediums nach Anspruch 1, umfassend den Schritt des Spritzgießens der Polycarbonatharzzusammensetzung bei einer Temperatur von 280 bis 326°C, um das Substrat als geformtes Teil zu bilden.

## Revendications

1. Milieu d'enregistrement d'informations optiques du type comprenant un support et une couche d'enregistrement formée sur le support, le support étant constitué par un élément moulé par injection en une composition de résine polycarbonate contenant un ester d'acide gras en tant qu'agent de démoulage caractérisé en ce que ledit ester d'acide gras a un indice d'hydroxyle qui ne dépasse pas 5 mg de KOH/g et est présent en une quantité de 0,005 à 0,5 % en masse par rapport à la résine polycarbonate, et que ladite composition de résine polycarbonate contient un taux de stabilisant thermique ne dépassant pas 5 ppm.

2. Milieu d'enregistrement d'informations optiques selon la revendication 1, dans laquelle le stabilisant thermique est un composé phosphoreux.

3. Procédé de préparation d'un milieu d'enregistrement d'informations optiques selon la revendication 1, comprenant l'étape de moulage par injection de ladite composition de résine polycarbonate à une température située entre 280°C et 326°C pour former, comme élément moulé, ledit support.
